(19) Europäisches Patentamt
European Patent Office
Office européen des brevets

(11) **EP 4 725 780 A1**

(12) **EUROPEAN PATENT APPLICATION**

(43) Date of publication:
15.04.2026 Bulletin 2026/16

(21) Application number: 24205471.6

(22) Date of filing: **09.10.2024**

(51) International Patent Classification (IPC):
**B60W 10/08** (2006.01) **B60K 1/02** (2006.01)
**B60W 30/18** (2012.01)

(52) Cooperative Patent Classification (CPC):
**B60W 10/08; B60K 1/02; B60W 30/18172;**
B60W 40/068; B60W 2040/1315; B60W 2300/125;
B60W 2520/16; B60W 2520/263; B60W 2520/28;
B60W 2540/10; B60W 2552/15; B60W 2720/263;
B60W 2720/30; B60W 2720/403

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Construction Equipment AB**
**631 85 Eskilstuna (SE)**

(72) Inventors:
• JONASSON, Mats
  **433 49 PARTILLE (SE)**
• KVIST, Roland
  **360 42 BRAÅS (SE)**
• JOHANSSON, Håkan
  **352 42 VÄXJÖ (SE)**

(74) Representative: **Kransell & Wennborg KB**
**P.O. Box 2096**
**403 12 Göteborg (SE)**

(54) **CONTROLLING POWER TRAIN ARRANGEMENT TOWARDS ACHIEVING SUBSTANTIALLY EQUAL FRICTION UTILIZATION**

(57) A computer system (7) comprising processing circuitry (21) configured to: receive a set of indications including an indication (23) of a requested propulsion force ($F_{prop}$) for a vehicle (1) and an indication (25) of a longitudinal inclination ($\theta$) of the vehicle (1); determine, based on the set of indications, an estimation of a height (h) above ground (2) of a center of mass (3) of the vehicle (1), and geometrical relations between the center of mass (3) of the vehicle (1) and each drive axle (5a-c), a drive axle propulsion force ($F_{ax}$, $F_{bx}$, $F_{cx}$) or torque for each drive axle (5a-c) resulting in substantially equal friction utilization for each drive axle (5a-c); and control a power train arrangement (9a-c) of the vehicle (1) towards providing, to each drive axle (5a-c), the drive axle propulsion force ($F_{ax}$, $F_{bx}$, $F_{cx}$) or torque determined for that drive axle (5a-c).

Fig. 1

**Description**

**TECHNICAL FIELD**

The disclosure relates generally to operation of a vehicle. In particular aspects, the disclosure relates to controlling a power train arrangement of a vehicle towards achieving substantially equal friction utilization. The disclosure can be applied to heavy-duty vehicles, such as trucks, buses, and construction equipment, in particular articulated haulers, among other vehicle types. Although the disclosure may be described with respect to a particular vehicle, the disclosure is not restricted to any particular vehicle.

**BACKGROUND**

For various vehicles with a plurality of drive axles, it may be desirable to improve the ability to advance (forwards or backwards) under challenging conditions, such as in steep slopes.

**SUMMARY**

According to a first aspect of the disclosure, there is provided a computer system comprising processing circuitry configured to receive a set of indications including an indication of a requested propulsion force for a vehicle and an indication of a longitudinal inclination of the vehicle; determine, based on the set of indications, an estimation of a height above ground of a center of mass of the vehicle, and geometrical relations between the center of mass of the vehicle and each drive axle of a plurality of drive axles of the vehicle, a drive axle propulsion force or torque for each drive axle of the plurality of drive axles resulting in substantially equal friction utilization for each drive axle of the plurality of drive axles; and control a power train arrangement of the vehicle towards providing, to each drive axle of the plurality of drive axles, the drive axle propulsion force or torque determined for that drive axle. The first aspect of the disclosure may seek to achieve substantially equal friction utilization for each drive axle of a plurality of drive axles of a vehicle. A technical benefit may include to provide for an improved ability to advance (backwards or forwards) under challenging conditions, such as in steep slopes.

By equal friction utilization for different drive axles of a vehicle is generally understood that there is an equal relation between a tire force component parallel to the ground and a tire force component perpendicular to the ground for each drive axle, under an assumption that the friction coefficient under all axles are the same. If not, then equal friction utilization means that the reference is the tire force component perpendicular to the ground for each axle multiplied by the friction coefficient under each axle. With an equal friction utilization for each drive axle of a plurality of drive axles of a vehicle, a maximum of the currently available friction can be used to advance the vehicle (forwards or backwards). To achieve an equal friction utilization, suitable drive axle propulsion forces and/or torques may thus be determined for each drive axle in the plurality of drive axles of the vehicle. With equal friction utilization, the climbing capability of a vehicle may be maximized since it is expected that all axles will reach their force limits at the same time, for example when the inclination angle is gradually increasing.

The present inventors have realized that the above-mentioned tire force component perpendicular to the ground, i.e. the vertical tire force, typically changes when the propulsion force changes, and that this effect can be included in the determination of the propulsion force, or propulsion torque, for each drive axle if the longitudinal inclination of the vehicle is used as a basis for the determination. Accordingly, using the indication of the longitudinal inclination of the vehicle as a basis, may improve the reliability and robustness of the determination of the desired drive axle propulsion force, or drive axle propulsion torque. It should be noted that the longitudinal inclination is in relation to a horizontal plane.

The geometrical relations between the center of mass of the vehicle and each drive axle may include a first longitudinal distance between the center of mass of the vehicle and a first drive axle and a second longitudinal distance between the center of mass of the vehicle and a second drive axle. It should be understood that a group of drive axles may be considered to correspond to a single virtual drive axle. Thus, a longitudinal distance between the center of mass of the vehicle and a virtual drive axle may be considered, and a drive axle propulsion force, or propulsion torque, may be determined for the virtual drive axle. The determined drive axle propulsion force, or propulsion torque, may then be distributed among the drive axles being collectively represented by the virtual drive axle. This may simplify the determination of the drive axle propulsion force, or drive axle propulsion torque, for each drive axle.

The estimation of the height above ground of the center of mass of the vehicle may, for example, be based on a known height for an empty vehicle and knowledge about the current load. For instance, a known load material and volume may be mapped on an estimated height of the center of mass of the vehicle.

Optionally in some examples, including in at least one preferred example, the processing circuitry may be configured to: receive an indication of a rotational speed of a wheel on a first drive axle of the plurality of drive axles, and an indication of a rotational speed of a wheel on a second drive axle of the plurality of drive axles; determine, based on the indication of the rotational speed of the wheel on the first drive axle of the plurality of drive axles, and the indication of the rotational speed of the wheel on the second drive axle of the plurality of drive axles, a measured speed difference between the rotational speed of the wheel on the first drive axle and the rotational speed of the wheel on the second drive axle; and control the power train arrangement of the vehicle additionally based on the measured speed difference. A technical benefit may include that the operation characteristics of the vehicle can be improved. For instance, measured speed differences may be determined due to, for example, spatially varying friction and/or different instantaneous ground inclinations for different drive axles, and the power train arrangement can be controlled to adapt the control of the power train arrangement to, for example, limit unwanted slip and/or improve the ride comfort.

Optionally in some examples, including in at least one preferred example, the processing circuitry may be configured to: control, in response to detecting that the measured speed difference is greater than a predefined threshold speed difference, the power train arrangement of the vehicle to reduce the difference between the rotational speed of the wheel on the first drive axle and the rotational speed of the wheel on the second drive axle. A technical benefit may include that unwanted slip can be limited and/or the ride comfort can be improved.

Optionally in some examples, including in at least one preferred example, the processing circuitry may be configured to control the power train arrangement of the vehicle to reduce the difference between the rotational speed of the wheel on the first drive axle and the rotational speed of the wheel on the second drive axle, by reducing the drive axle propulsion force provided to at least one of the first axle and the second axle. A technical benefit may include that excessive slip can be prevented.

Optionally in some examples, including in at least one preferred example, the processing circuitry may be configured to receive an indication of a pitch rate of the vehicle; estimate, based on the indication of the pitch rate of the vehicle and one of the indication of the rotational speed of the wheel on the first drive axle of the plurality of drive axles, and the indication of the rotational speed of the wheel on the second drive axle of the plurality of drive axles, an expected speed difference between the rotational speed of the wheel on the first drive axle and the rotational speed of the wheel on the second drive axle; and control, in response to detecting a deviation between the measured speed difference and the expected speed difference, the power train arrangement of the vehicle to reduce the deviation between the measured speed difference and the expected speed difference. A technical benefit may include that changes in the pitch of the vehicle can be taken into account, so that the measured speed difference can be evaluated in relation to an expected speed difference which may naturally occur, and which may actually be necessary for smooth operation of the vehicle when moving across uneven terrain.

Optionally in some examples, including in at least one preferred example, the processing circuitry may be configured to control the power train arrangement of the vehicle to reduce the deviation between the measured speed difference and the expected speed difference, by reducing the drive axle propulsion force provided to at least one of the first axle and the second axle.

Optionally in some examples, including in at least one preferred example, the processing circuitry may be configured to control the power train arrangement of the vehicle by providing control commands to an electrical drive arrangement comprised in the power train arrangement. A technical benefit may include that an electrical drive arrangement can be controlled for faster changes and can be separately controlled in respect of propulsion force/torque and rotational speed. This provides for improved control of the vehicle.

The computer system according to examples of the present disclosure may advantageously be included in a vehicle, further comprising a plurality of drive axles; and a power train arrangement.

According to a second aspect of the disclosure, there is provided a computer-implemented method, comprising: receiving a set of indications including an indication of a requested propulsion force for a vehicle and an indication of a longitudinal inclination of the vehicle; determining, based on the set of indications, an estimation of a height above ground of a center of mass of the vehicle, and geometrical relations between the center of mass of the vehicle and each drive axle of a plurality of drive axles of the vehicle, a drive axle propulsion force or torque for each drive axle of the plurality of drive axles resulting in substantially equal friction utilization for each drive axle of the plurality of drive axles; and controlling a power train arrangement of the vehicle towards providing, to each drive axle of the plurality of drive axles, the drive axle propulsion force or torque determined for that drive axle. The first aspect of the disclosure may seek to achieve substantially equal friction utilization for each drive axle of a plurality of drive axles of a vehicle. A technical benefit may include to provide for an improved ability to advance (backwards or forwards) under challenging conditions, such as in steep slopes.

By equal friction utilization for different drive axles of a vehicle is generally understood that there is an equal relation between a tire force component parallel to the ground and a tire force component perpendicular to the ground for each drive axle. With an equal friction utilization for each drive axle of a plurality of drive axles of a vehicle, a maximum of the currently available friction can be used to advance the vehicle (forwards or backwards). To achieve an equal friction utilization, suitable drive axle propulsion forces and/or torques may thus be determined for each drive axle in the plurality of drive axles of the vehicle.

The present inventors have realized that the above-mentioned tire force component perpendicular to the ground typically changes when the propulsion force changes, and that this effect can be included in the determination of the propulsion force, or propulsion torque, for each drive axle if the longitudinal inclination of the vehicle is used as a basis for the determination. Accordingly, using the indication of the longitudinal inclination of the vehicle as a basis, may improve the reliability and robustness of the determination of the desired drive axle propulsion force, or drive axle propulsion torque. It should be noted that the longitudinal inclination is in relation to a horizontal plane.

The geometrical relations between the center of mass of the vehicle and each drive axle may include a first longitudinal distance between the center of mass of the vehicle and a first drive axle and a second longitudinal distance between the center of mass of the vehicle and a second drive axle. It should be understood that a group of drive axles may be considered to correspond to a single virtual drive axle. Thus, a longitudinal distance between the center of mass of the vehicle and a virtual drive axle may be considered, and a drive axle propulsion force, or propulsion torque, may be determined for the virtual drive axle. The determined drive axle propulsion force, or propulsion torque, may then be distributed among the drive axles being collectively represented by the virtual drive axle. This may simplify the determination of the drive axle propulsion force, or drive axle propulsion torque, for each drive axle.

The estimation of the height above ground of the center of mass of the vehicle may, for example, be based on a known height for an empty vehicle and knowledge about the current load. For instance, a known load material and volume may be mapped on an estimated height of the center of mass of the vehicle.

Optionally in some examples, including in at least one preferred example, the method may comprise: receiving an indication of a rotational speed of a wheel on a first drive axle of the plurality of drive axles, and an indication of a rotational speed of a wheel on a second drive axle of the plurality of drive axles; determining, based on the indication of the rotational speed of the wheel on the first drive axle of the plurality of drive axles, and the indication of the rotational speed of the wheel on the second drive axle of the plurality of drive axles, a measured speed difference between the rotational speed of the wheel on the first drive axle and the rotational speed of the wheel on the second drive axle; and controlling the power train arrangement of the vehicle additionally based on the measured speed difference. A technical benefit may include that the operation characteristics of the vehicle can be improved. For instance, measured speed differences may be determined due to, for example, spatially varying friction and/or different instantaneous ground inclinations for different drive axles, and the power train arrangement can be controlled to adapt the control of the power train arrangement to, for example, limit unwanted slip and/or improve the ride comfort.

Optionally in some examples, including in at least one preferred example, the method may comprise: controlling, in response to detecting that the measured speed difference is greater than a predefined threshold speed difference, the power train arrangement of the vehicle to reduce the difference between the rotational speed of the wheel on the first drive axle and the rotational speed of the wheel on the second drive axle. A technical benefit may include that unwanted slip can be limited and/or the ride comfort can be improved.

Optionally in some examples, including in at least one preferred example, the method may comprise controlling the power train arrangement of the vehicle to reduce the difference between the rotational speed of the wheel on the first drive axle and the rotational speed of the wheel on the second drive axle, by reducing the drive axle propulsion force provided to at least one of the first axle and the second axle. A technical benefit may include that excessive slip can be prevented.

Optionally in some examples, including in at least one preferred example, the method may comprise receiving an indication of a pitch rate of the vehicle; estimating, based on the indication of the pitch rate of the vehicle and one of the indication of the rotational speed of the wheel on the first drive axle of the plurality of drive axles, and the indication of the rotational speed of the wheel on the second drive axle of the plurality of drive axles, an expected speed difference between the rotational speed of the wheel on the first drive axle and the rotational speed of the wheel on the second drive axle; and controlling, in response to detecting a deviation between the measured speed difference and the expected speed difference, the power train arrangement of the vehicle to reduce the deviation between the measured speed difference and the expected speed difference. A technical benefit may include that changes in the pitch of the vehicle can be taken into account, so that the measured speed difference can be evaluated in relation to an expected speed difference which may naturally occur, and which may actually be necessary for smooth operation of the vehicle when moving across uneven terrain.

Optionally in some examples, including in at least one preferred example, the method may comprise controlling the power train arrangement of the vehicle to reduce the deviation between the measured speed difference and the expected speed difference, by reducing the drive axle propulsion force provided to at least one of the first axle and the second axle.

Optionally in some examples, including in at least one preferred example, the method may comprise controlling the power train arrangement of the vehicle by providing control commands to an electrical drive arrangement comprised in the power train arrangement. A technical benefit may include that an electrical drive arrangement can be controlled for faster changes and can be separately controlled in respect of propulsion force/torque and rotational speed. This provides for improved control of the vehicle.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

> **FIG. 1** is an exemplary vehicle according to an example.
> **FIG. 2** is a functional illustration of an exemplary vehicle, comprising an exemplary computer system according to an example.
> **FIG. 3** is an exemplary method according to an example.
> **FIG. 4** is an exemplary method according to an example.
> **FIG. 5** is an illustration of exemplary vehicle with different slope angles for different drive axles.
> **FIG. 6** is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

Throughout this application, references to the vehicle co-ordinate system will follow well-established geometry conventions for vehicle motion management of a vehicle, where the x-direction refers to the horizontal longitudinal direction for the vehicle, the y-direction refers to the horizontal lateral (sideways) direction for the vehicle, and the z-direction refers to the vertical direction for the vehicle.

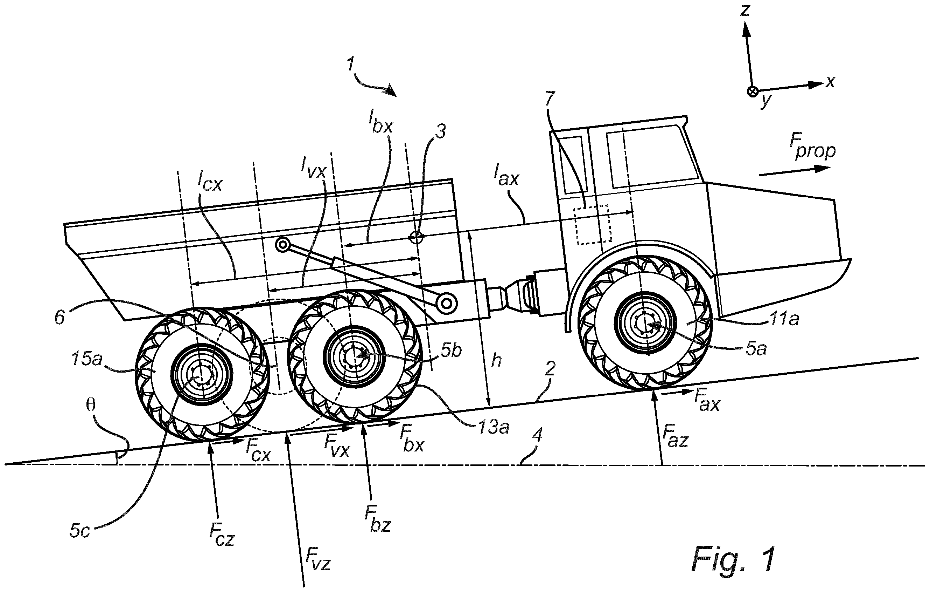

Fig. 1 is an exemplary vehicle 1 according to an example, here in the form of an articulated hauler. The vehicle 1 stands on a ground plane 2, which is here exemplified by an uphill slope at an exemplary inclination angle $\theta$ in relation to a horizontal plane 4. The vehicle 1 has a center of mass 3 located at a height h above the ground plane 2. The height h is a distance, in the z-direction in the vehicle co-ordinate system. As is schematically shown in Fig. 1, the vehicle has a plurality of drive axles 5a-c, here a front drive axle 5a with tires 11a-b (only one tire 11a is visible in Fig. 1), a first rear axle 5b with tires 13a-b (only one tire 13a is visible in Fig. 1), and a second rear axle 5c with tires 15a-b (only one tire 15a is visible in Fig. 1). For the purposes of estimations and calculations related to vehicle motion management, it is common practice to replace a group of axles with a so-called virtual axle. In Fig. 1, a virtual rear axle 6 is shown arranged between the first rear axle 5b and the second rear axle 5c. When estimations and/or calculations have been made for the virtual rear axle 6, the result can be distributed among the first rear axle 5b and the second rear axle 5c. Referring to Fig. 1, the drive axles 5a-c are spaced apart from the center of mass 3 of the vehicle 1 by respective longitudinal distances $l_{ax}$, $l_{bx}$, $l_{cx}$, and the virtual drive axle 6 is spaced apart from the center of mass 3 of the vehicle 1 by longitudinal distance $l_{vx}$, which is here the average of the distances $l_{bx}$, $l_{cx}$ to the first rear axle 5b and the second rear axle 5c, respectively.

For efficient use of a requested propulsion force $F_{prop}$ to enable, for example, advantageous climbing performance of the vehicle 1 in Fig. 1, it would be desirable to achieve equal friction utilization among the drive axles 5a-c of the vehicle 1. For the case where the coefficient of friction is the same for all tires of all drive axles 5a-c, this means that the ratio between a tire force component parallel to the ground and a tire force component perpendicular to the ground is equal for each drive axle. Referring to Fig. 1:

$$\frac{F_{ax}}{F_{az}} = \frac{F_{bx}}{F_{bz}} = \frac{F_{cx}}{F_{cz}} \tag{1}$$

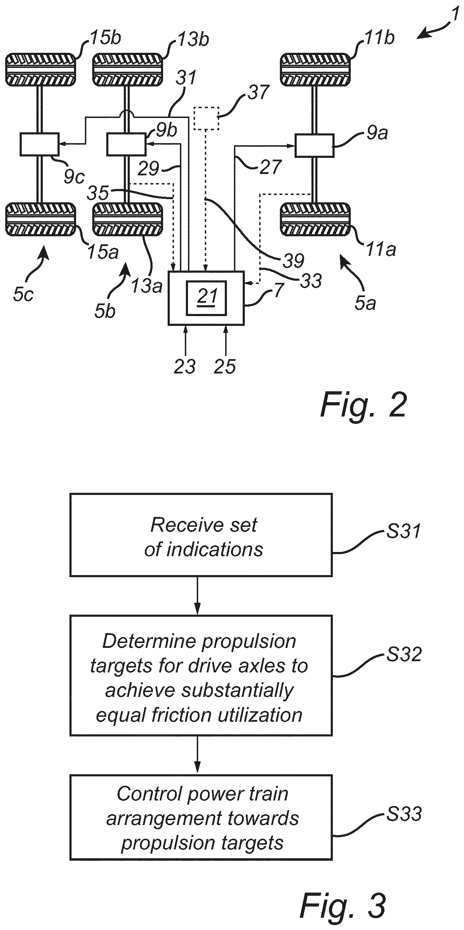

Fig. 2 is a functional illustration of an exemplary vehicle 1. Referring to Fig. 2, the exemplary vehicle 3 comprises a plurality of drive axles 5a-c, and a power train arrangement, here in the form of a first electrical machine 9a arranged to drive the front drive axle 5a, a second electrical machine 9b arranged to drive the first rear axle 5b, and a third electrical machine 9c arranged to drive the second rear axle 5c. It should be note that the power train arrangement may, alternatively or in addition, comprise an internal combustion engine, as long as a requested propulsion force, or requested propulsion torque, can be distributed among the drive axles 5a-c by the power train arrangement. One or more of the drive axles 5a-c may alternatively be provided with two electrical machines arranged to independently drive the wheels of the drive axle. As described above with reference to Fig. 1, the front drive axle 5a has tires 11a-b for transmitting the torque provided by the first electrical machine 9a to the ground 2, the first rear drive axle 5b has tires 13a-b for transmitting the torque provided by the second electrical machine 9b to the ground 2, and the second rear drive axle 5c has tires 15a-b for transmitting the torque provided by the third electrical machine 9c to the ground 2.

As is shown in Fig. 2, the vehicle 1 comprises a computer system 7, including processing circuitry 21. The processing circuitry 21 of the computer system 7 is configured to receive a set of indications including an indication 23 of a requested propulsion force for the vehicle 1 and an indication 25 of the longitudinal inclination $\theta$ of the vehicle 1 (see Fig. 1), to determine a drive axle propulsion force or torque for each drive axle 5a-c resulting in substantially equal friction utilization for each drive axle 5a-c, and to control the power train arrangement, here the electrical machines 9a-c of the respective drive axles 5a-c towards providing the respective determined drive axle propulsion forces or torques. In Fig. 2, this control is illustrated by a first control command 27 provided by the processing circuitry 21 to the first electrical machine 9a, a second control command 29 provided by the processing circuitry 21 to the second electrical machine 9b, and a third control command 31 provided by the processing circuitry 21 to the third electrical machine 9c.

Optionally, as is indicated by dashed lines in Fig. 2, the processing circuitry comprised in the computer system 7 may be configured to receive an indication 33 of a rotational speed of a wheel 11a on a first drive axle, here exemplified by the front drive axle 5a, and an indication 35 of a rotational speed of a wheel 13a on a second drive axle, here exemplified by the first rear drive axle 5b, to determine, based on the indications 33, 35, a measured speed difference between the rotational speed of the wheel 11a on the first drive axle, here the front drive axle 5a, and the rotational speed of the wheel 13a on the second drive axle, here the first rear drive axle 5b, and to control the power train arrangement, here the electrical machines 9a-c of the respective drive axles 5a-c additionally based on the measured speed difference.

Optionally, as is indicated by dashed lines and a dashed box in Fig. 2, the processing circuitry comprised in the computer system 7 may be configured to receive, from a sensor 37 comprised in the vehicle 1, an indication 39 of a pitch rate of the vehicle 1, to estimate, based on the indication 39 of the pitch rate and one of the indications 33, 35 of the above-mentioned rotational speeds, an expected speed difference between the rotational speed of the wheel 11a on the first drive axle, here the front drive axle 5a, and the rotational speed of the wheel 13a on the second drive axle, here the first rear drive axle 5b, and to control, in response to detecting a deviation between the measured speed difference and the expected speed difference, the power train arrangement, here the electrical machines 9a-c of the respective drive axles 5a-c to reduce the deviation between the measured speed difference and the expected speed difference.

Fig. 3 is an exemplary method according to an example. Referring to the flow-chart in Fig. 3, and additionally as applicable to the illustrations in Fig. 1 and Fig. 2, the method comprises receiving S31, by the processing circuitry 21 of the computer system 7 in Fig. 2 a set of indications including an indication 23 of a requested propulsion force $F_{prop}$ for a vehicle 1 and an indication 25 of a longitudinal inclination $\theta$ of the vehicle 1. The indication 23 of the requested total propulsion force $F_{prop}$ (or the requested total propulsion torque) may, for example, be based on a driver command, such as an accelerator pedal angle. Alternatively, the indication 23 of the requested total propulsion force $F_{prop}$ (or the requested total propulsion torque) may be based on a signal from an autonomous drive system. The indication 25 of the longitudinal inclination $\theta$ of the vehicle 1 may, for example, be based on input from an inclination sensor (not shown) that may be comprised in the vehicle 1.

As is indicated in Fig. 3, the method further comprises determining S32, based on the set of indications, an estimation of a height h above ground 2 of a center of mass 3 of the vehicle 1, and geometrical relations between the center of mass 3 of the vehicle 1 and each drive axle 5a-c of a plurality of drive axles of the vehicle 1, a drive axle propulsion force $F_{ax}, F_{bx}, F_{cx}$, or torque, for each drive axle 5a-c of the plurality of drive axles resulting in substantially equal friction utilization for each drive axle 5a-c of the plurality of drive axles.

One example of how to determine these drive axle propulsion forces $F_{ax}, F_{bx}, F_{cx}$, or torques, will now be provided with additional reference to the illustration in Fig. 1. For simplicity, the machine is assumed to be driving straight ahead, in the x-direction, and the articulation angle is zero. To simplify the calculations, as mentioned further above, the first rear axle 5b and the second rear axle 5c have been replaced by a virtual axle 6 representing a lumped version of the two axles. In response to a request for a requested propulsion force $F_{prop}$, or requested propulsion torque, the vehicle 1 is propelled with torque which results in tire force components $F_{ax}, F_{bx}, F_{cx}$ parallel to the ground 2 and a tire force components $F_{az}, F_{bz}, F_{cz}$ perpendicular to the ground. To simplify the calculations, the tire force components related to the first 5b and second 5c rear drive axles are replaced by tire force components $F_{vx}, F_{vz}$ of the virtual drive axle 6.

The following equations describe the motion of the vehicle 1. Starting with Newton's second law, force equilibrium for the center of mass 3 in the direction parallel to the ground plane yields:

$$m \cdot \dot{v}_x = F_{ax} + F_{vx} - m \cdot g \cdot \sin(\theta), \tag{2}$$

where $g$ is the gravity constant. For simplicity we assume that the vehicle 1 has no vertical acceleration:

$$m \cdot \dot{v}_z = 0 = F_{az} + F_{vz} - m \cdot g \cdot \cos(\theta) \tag{3}$$

Further, for simplicity we assume that a pitch acceleration of the vehicle 1 is zero:

$$m \cdot \dot{\omega}_x = 0 = -l_{ax} \cdot F_{az} + l_{vx} \cdot F_{vz} - h \cdot (F_{ax} + F_{vx}) \tag{4}$$

We will constrain equation (4) to a solution providing equal friction utilization (assuming that the friction coefficient is the same for both the front drive axle 5a and the virtual drive axle 6 (representing the rear drive axles 5b-c), such that:

$$\frac{F_{ax}}{F_{az}} = \frac{F_{vx}}{F_{vz}} \tag{5}$$

From equations (2)-(5) above, the propulsion forces in the direction parallel to the ground 2 can be expressed:

$$F_{ax} = \frac{m(\dot{v}_x + g\sin(\theta)) \cdot (gl_{vx}\cos(\theta) - h\dot{v}_x - gh\sin(\theta))}{g\cos(\theta) \cdot (l_{ax} + l_{vx})}; \text{ and} \tag{6a}$$

$$F_{vx} = \frac{m(\dot{v}_x + g\sin(\theta)) \cdot (gl_{ax}\cos(\theta) + h\dot{v}_x + gh\sin(\theta))}{g\cos(\theta) \cdot (l_{ax} + l_{vx})} \tag{6b}$$

The equations (6a-b) should be understood to mean at it is possible to compute the required longitudinal drive axle forces for an actual longitudinal acceleration when the inclination θ is known. The solution will guarantee that the propulsion force is distributed equally with respect to the drive axle loads. It should be noted that the normal forces have been eliminated in equations (6a-b).

In equations (6a-b), $\dot{v}_x$ signifies the requested longitudinal acceleration for the vehicle 1. The acceleration request could instead be provided as a propulsion force request, and is considered to be fully equivalent to a propulsion force request or a propulsion torque request.

As mentioned above, the virtual drive axle 6 has been used to simplify the calculations. The determined longitudinal force component $F_{vx}$ for the virtual drive axle 6 can be distributed between the first 5b and second 5c rear drive axles. According to an illustrative example, the inertia of the wheels, and the rolling resistance can be disregarded, and the propulsion torque to each axle can be determined as follows:

$$T_a = r_w \cdot F_{ax} \tag{7a}$$

$$T_b = r_w \cdot F_{vx} \cdot \frac{F_{bz}}{F_{vz}} \tag{7b}$$

$$T_c = r_w \cdot F_{vx} \cdot \frac{F_{cz}}{F_{vz}}, \tag{7c}$$

where $r_w$ is the tire radius, which is assumed to be equal for all wheels.

After having determined the drive axle propulsion force, or torque, for each drive axle 5a-c, the method proceeds to control S33 a power train arrangement of the vehicle 1, such as the electrical machines 9a-c in Fig. 2 towards providing, to each drive axle 5a-c, the drive axle propulsion force $F_{ax}$, $F_{bx}$, $F_{cx}$ or torque $T_a$, $T_b$, $T_c$ determined for that drive axle 5a-c.

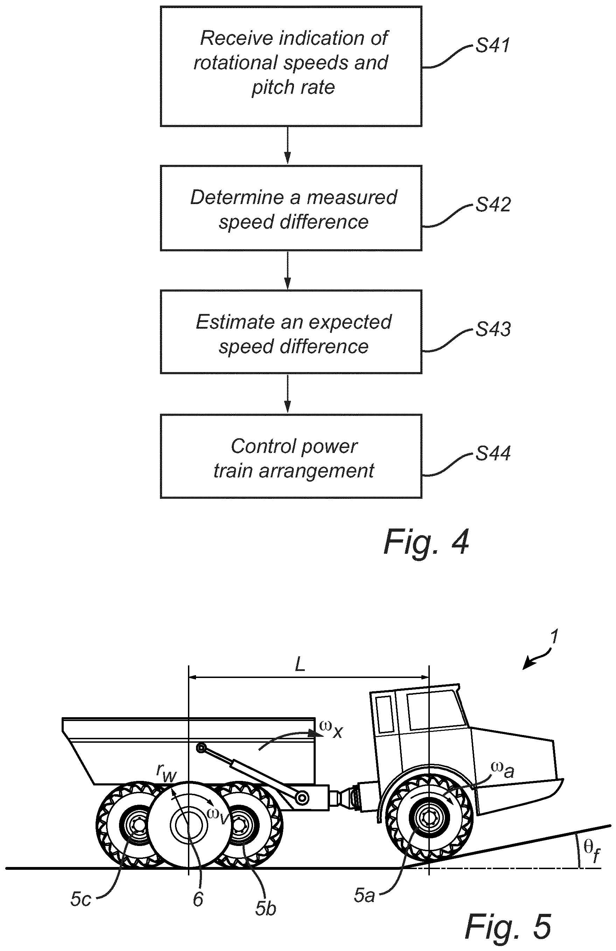

Fig. 4 is an exemplary method according to an example, defining actions that may take place in addition to the actions described above with reference to the flow-chart in Fig. 3. It should be noted that, unless when a particular order is explicitly or implicitly necessary for the described functionality, the various actions described herein may take place in any order and/or simultaneously. Referring to the flow-chart in Fig. 4, and additionally as applicable to other illustrations, the method comprises receiving S41, by the processing circuitry 21 of the computer system 7 in Fig. 2, an indication 33 of a rotational speed of a wheel 1 1a on a first drive axle, here represented by the front drive axle 5a, an indication 35 of a rotational speed of a wheel 13a on a second drive axle, here represented by the first rear drive axle 5b, and an indication 39 of a pitch rate $\omega_x$ of the vehicle 1, see Fig. 5 for a schematic illustration of a vehicle subjected to a non-zero pitch rate.

As is indicated in Fig. 4, the method further comprises determining S42, based on the indication 33 of the rotational speed of the wheel 11a on the first drive axle 5a, and the indication 35 of the rotational speed of the wheel 13a on the second drive axle 5b, a measured speed difference between the rotational speed of the wheel 1 1a on the first drive axle 5a and the rotational speed of the wheel 13a on the second drive axle 5b.

As was mentioned further above in the Summary section, the power train arrangement of the vehicle 1, such as the electrical machines 9a-c shown in Fig. 2, may be controlled additionally based on the measured speed difference. For instance, the above-mentioned longitudinal drive axle forces $F_{ax}$, $F_{bx}$, $F_{cx}$ may be modified when the measured speed difference is greater than a predefined threshold difference.

As a complement or an alternative, the method may further comprise estimating S43, based on the indication 39 of the pitch rate $\omega_x$ of the vehicle 1 and on one of the indication 33 of the rotational speed of the wheel 11a on the first drive axle 5a and the indication 35 of the rotational speed of the wheel 13a on the second drive axle 5b, an expected speed difference between the rotational speed of the wheel 1 1a on the first drive axle 5a and the rotational speed of the wheel 13a on the second drive axle 5b.

When the vehicle 1 in Fig. 5 drives over a bump, represented by the inclination angle $\theta_f$ for the front drive axle 5a, and assuming the same tire radius and slip on all wheels of the vehicle 1, the expected speed difference between the rotational speed of the wheel 11a on the first drive axle 5a and the rotational speed of the (virtual) wheel on the virtual drive axle 6 representing the first rear drive axle 5b and the second rear drive axle 5c can be written as:

$$\Delta\omega_{exp} = \omega_v - \frac{\sqrt{(r_w \cdot (1-s_x) \cdot \omega_v)^2 - (\omega_x \cdot L)^2}}{r_w \cdot (1-s_x)}, \tag{8}$$

wherein $r_w$ is the tire radius, $s_x$ is the slip, $\omega_v$ is the rotational speed of a (virtual) wheel on the virtual drive axle 6, $\omega_x$ is the pitch rate of the vehicle 1, and L is the longitudinal distance between the front drive axle 5a and the virtual drive axle 6.

For completeness, the measured speed difference is given by:

$$\Delta\omega_{meas} = \omega_v - \omega_a, \tag{9}$$

wherein $\omega_a$ is the rotational speed of the front drive axle 5a. The rotational speed $\omega_v$ of the virtual drive axle 6 can be taken as the average between measured rotations speeds of the first rear drive axle 5b and the second rear drive axle 5c.

After having determined the measured speed difference $\Delta\omega_{meas}$ and estimated the expected speed difference $\Delta\omega_{exp}$, the power train arrangement, here represented by the electrical machines 9a-c in Fig. 2, can be controlled S44, in response to detecting a deviation between the measured speed difference $\Delta\omega_{meas}$ and the expected speed difference $\Delta\omega_{exp}$, to reduce the deviation between the measured speed difference and the expected speed difference.

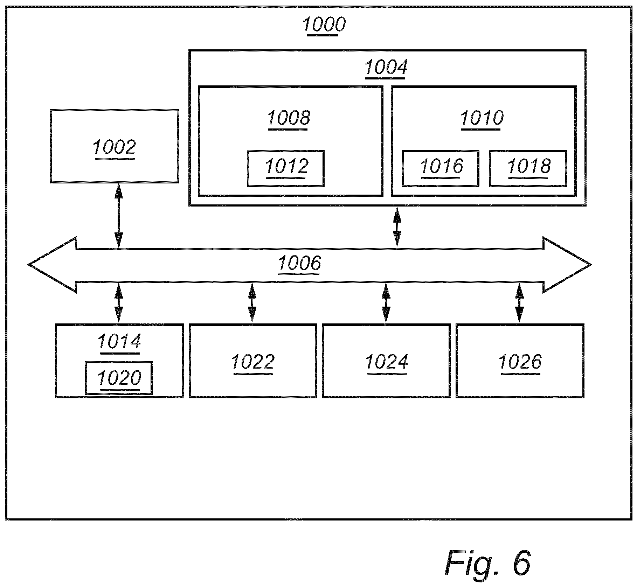

Fig. 6 is a schematic diagram of a computer system 1000 for implementing examples disclosed herein, such as for implementing examples of the computer system 7 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: receive a set of indications including an indication of a requested propulsion force for a vehicle and an indication of a longitudinal inclination of the vehicle; determine, based on the set of indications, an estimation of a height above ground of a center of mass of the vehicle, and geometrical relations between the center of mass of the vehicle and each drive axle of a plurality of drive axles of the vehicle, a drive axle propulsion force or torque for each drive axle of the plurality of drive axles resulting in substantially equal friction utilization for each drive axle of the plurality of drive axles; and control a power train arrangement of the vehicle towards providing, to each drive axle of the plurality of drive axles, the drive axle propulsion force or torque determined for that drive axle.

Example 2: The computer system of example 1, wherein the processing circuitry is configured to: receive an indication of a rotational speed of a wheel on a first drive axle of the plurality of drive axles, and an indication of a rotational speed of a wheel on a second drive axle of the plurality of drive axles; determine, based on the indication of the rotational speed of the wheel on the first drive axle of the plurality of drive axles, and the indication of the rotational speed of the wheel on the second drive axle of the plurality of drive axles, a measured speed difference between the rotational speed of the wheel on the first drive axle and the rotational speed of the wheel on the second drive axle; and control the power train arrangement of the vehicle additionally based on the measured speed difference.

Example 3: The computer system of example 2, wherein the processing circuitry is configured to: control, in response to detecting that the measured speed difference is greater than a predefined threshold speed difference, the power train arrangement of the vehicle to reduce the difference between the rotational speed of the wheel on the first drive axle and the rotational speed of the wheel on the second drive axle.

Example 4: The computer system of example 3, wherein the processing circuitry is configured to control the power train arrangement of the vehicle to reduce the difference between the rotational speed of the wheel on the first drive axle and the rotational speed of the wheel on the second drive axle, by reducing the drive axle propulsion force provided to at least one of the first axle and the second axle.

Example 5: The computer system of example 2, wherein the processing circuitry is configured to: receive an indication of a pitch rate of the vehicle; estimate, based on the indication of the pitch rate of the vehicle and one of the indication of the rotational speed of the wheel on the first drive axle of the plurality of drive axles, and the indication of the rotational speed of the wheel on the second drive axle of the plurality of drive axles, an expected speed difference between the rotational speed of the wheel on the first drive axle and the rotational speed of the wheel on the second drive axle; and control, in response to detecting a deviation between the measured speed difference and the expected speed difference, the power train arrangement of the vehicle to reduce the deviation between the measured speed difference and the expected speed difference.

Example 6: The computer system of example 5, wherein the processing circuitry is configured to control the power train arrangement of the vehicle to reduce the deviation between the measured speed difference and the expected speed difference, by reducing the drive axle propulsion force provided to at least one of the first axle and the second axle.

Example 7: The computer system of example 1, wherein the processing circuitry is configured to: control the power train arrangement of the vehicle by providing control commands to an electrical drive arrangement comprised in the power train arrangement.

Example 8: The computer system of example 7, wherein the processing circuitry is configured to: control the power train arrangement of the vehicle by providing a first set of control commands to a first electrical machine arranged to drive a first drive axle of the plurality of drive axles, and a second set of control commands to a second electrical machine arranged to drive a second drive axle of the plurality of drive axles.

Example 9: A vehicle comprising: a plurality of drive axles; a power train arrangement; and the computer system of example 1.

Example 10: A computer-implemented method, comprising: receiving a set of indications including an indication of a requested propulsion force for a vehicle and an indication of a longitudinal inclination of the vehicle; determining, based on the set of indications, an estimation of a height above ground of a center of mass of the vehicle, and geometrical relations between the center of mass of the vehicle and each drive axle of a plurality of drive axles of the vehicle, a drive axle propulsion force or torque for each drive axle of the plurality of drive axles resulting in substantially equal friction utilization for each drive axle of the plurality of drive axles; and controlling a power train arrangement of the vehicle towards providing, to each drive axle of the plurality of drive axles, the drive axle propulsion force or torque determined for that drive axle.

Example 11: The method of example 10, comprising: receiving an indication of a rotational speed of a wheel on a first drive axle of the plurality of drive axles, and an indication of a rotational speed of a wheel on a second drive axle of the plurality of drive axles; determining, based on the indication of the rotational speed of the wheel on the first drive axle of the plurality of drive axles, and the indication of the rotational speed of the wheel on the second drive axle of the plurality of drive axles, a measured speed difference between the rotational speed of the wheel on the first drive axle and the rotational speed of the wheel on the second drive axle; and controlling the power train arrangement of the vehicle additionally based on the measured speed difference.

Example 12: The method of example 11, comprising: controlling, in response to detecting that the measured speed difference is greater than a predefined threshold speed difference, the power train arrangement of the vehicle to reduce the difference between the rotational speed of the wheel on the first drive axle and the rotational speed of the wheel on the second drive axle.

Example 13: The method of example 12, comprising controlling the power train arrangement of the vehicle to reduce the difference between the rotational speed of the wheel on the first drive axle and the rotational speed of the wheel on the second drive axle, by reducing the drive axle propulsion force provided to at least one of the first axle and the second axle.

Example 14: The method of example 11, comprising: receiving an indication of a pitch rate of the vehicle; estimating, based on the indication of the pitch rate of the vehicle and one of the indication of the rotational speed of the wheel on the first drive axle of the plurality of drive axles, and the indication of the rotational speed of the wheel on the second drive axle of the plurality of drive axles, an expected speed difference between the rotational speed of the wheel on the first drive axle and the rotational speed of the wheel on the second drive axle; and controlling, in response to detecting a deviation between the measured speed difference and the expected speed difference, the power train arrangement of the vehicle to reduce the deviation between the measured speed difference and the expected speed difference.

Example 15: The method of example 14, comprising: controlling the power train arrangement of the vehicle to reduce the deviation between the measured speed difference and the expected speed difference, by reducing the drive axle propulsion force provided to at least one of the first axle and the second axle.

Example 16: The method of example 10, comprising: controlling the power train arrangement of the vehicle by providing control commands to an electrical drive arrangement comprised in the power train arrangement.

Example 17: The method of example 16, comprising: controlling the power train arrangement of the vehicle by providing a first set of control commands to a first electrical machine arranged to drive a first drive axle of the plurality of drive axles, and a second set of control commands to a second electrical machine arranged to drive a second drive axle of the plurality of drive axles.

Example 18: A computer program product comprising program code for performing, when executed by the processing circuitry comprised in the computer system of any one of examples 1 to 8, the method of example 10.

Example 19: A non-transitory computer-readable storage medium comprising instructions, which when executed by the processing circuitry comprised in the computer system of example 1, cause the processing circuitry to perform the method of example 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (7) comprising processing circuitry (21) configured to:

   receive a set of indications including an indication (23) of a requested propulsion force ($F_{prop}$) for a vehicle (1) and an indication (25) of a longitudinal inclination ($\theta$) of the vehicle (1);
   determine, based on the set of indications, an estimation of a height (h) above ground (2) of a center of mass (3) of the vehicle (1), and geometrical relations between the center of mass (3) of the vehicle (1) and each drive axle (5a-c) of a plurality of drive axles of the vehicle (1), a drive axle propulsion force ($F_{ax}$, $F_{bx}$, $F_{cx}$) or torque for each drive axle (5a-c) of the plurality of drive axles resulting in substantially equal friction utilization for each drive axle (5a-c) of the plurality of drive axles; and
   control a power train arrangement (9a-c) of the vehicle (1) towards providing, to each drive axle (5a-c) of the plurality of drive axles, the drive axle propulsion force ($F_{ax}$, $F_{bx}$, $F_{cx}$) or torque determined for that drive axle (5a-c).

2. The computer system (7) of claim 1, wherein the processing circuitry (21) is configured to:

   receive an indication (33) of a rotational speed of a wheel (11a) on a first drive axle (5a) of the plurality of drive axles, and an indication (35) of a rotational speed of a wheel (13a) on a second drive axle (5b) of the plurality of drive axles;
   determine, based on the indication (33) of the rotational speed of the wheel (11a) on the first drive axle (5a) of the plurality of drive axles, and the indication (35) of the rotational speed of the wheel (13a) on the second drive axle (5b) of the plurality of drive axles, a measured speed difference between the rotational speed of the wheel (11a) on the first drive axle (5a) and the rotational speed of the wheel (13a) on the second drive axle (5b); and
   control the power train arrangement (9a-c) of the vehicle (1) additionally based on the measured speed difference.

3. The computer system (7) of claim 2, wherein the processing circuitry (21) is configured to:
   control, in response to detecting that the measured speed difference is greater than a predefined threshold speed difference, the power train arrangement (9a-c) of the vehicle (1) to reduce the difference between the rotational speed of the wheel (11a) on the first drive axle (5a) and the rotational speed of the wheel (13a) on the second drive axle (5b).

4. The computer system (7) of claim 3, wherein the processing circuitry (21) is configured to control the power train arrangement (9a-c) of the vehicle to reduce the difference between the rotational speed of the wheel (11a) on the first drive axle (5a) and the rotational speed of the wheel (13a) on the second drive axle (5b), by reducing the drive axle propulsion force ($F_{ax}$, $F_{bx}$) provided to at least one of the first axle (5a) and the second axle (5b).

5. The computer system (7) of any of claims 2-4, wherein the processing circuitry (21) is configured to:

   receive an indication (39) of a pitch rate of the vehicle (1);
   estimate, based on the indication (39) of the pitch rate of the vehicle (1) and one of the indication (33) of the rotational speed of the wheel (11a) on the first drive axle (5a) of the plurality of drive axles, and the indication (35) of the rotational speed of the wheel (13a) on the second drive axle (5b) of the plurality of drive axles, an expected speed difference between the rotational speed of the wheel (11a) on the first drive axle (5a) and the rotational speed of the wheel (13a) on the second drive axle (5b); and
   control, in response to detecting a deviation between the measured speed difference and the expected speed difference, the power train arrangement (9a-c) of the vehicle (1) to reduce the deviation between the measured speed difference and the expected speed difference.

6. The computer system (7) of claim 5, wherein the processing circuitry (21) is configured to control the power train arrangement (9a-c) of the vehicle (1) to reduce the deviation between the measured speed difference and the expected speed difference, by reducing the drive axle propulsion force ($F_{ax}$, $F_{bx}$) provided to at least one of the first axle (5a) and the second axle (5b).

7. The computer system (7) of any of claims 1-6, wherein the processing circuitry (21) is configured to:
   control the power train arrangement (9a-c) of the vehicle (1) by providing control commands (27, 29, 31) to an electrical drive arrangement comprised in the power train arrangement.

8. The computer system (7) of claim 7, wherein the processing circuitry (21) is configured to:

control the power train arrangement (9a-c) of the vehicle (1) by providing a first set (27) of control commands to a first electrical machine (9a) arranged to drive a first drive axle (5a) of the plurality of drive axles, and a second set (29) of control commands to a second electrical machine (9b) arranged to drive a second drive axle (5b) of the plurality of drive axles.

9. A vehicle (1) comprising:

a plurality of drive axles (5a-c);
a power train arrangement (9a-c); and
the computer system (7) of any of claims 1-8.

10. A computer-implemented method, comprising:

receiving (S31) a set of indications including an indication (23) of a requested propulsion force ($F_{prop}$) for a vehicle (1) and an indication (25) of a longitudinal inclination ($\theta$) of the vehicle (1);
determining (S32), based on the set of indications, an estimation of a height (h) above ground (2) of a center of mass (3) of the vehicle (1), and geometrical relations between the center of mass (3) of the vehicle (1) and each drive axle (5a-c) of a plurality of drive axles of the vehicle (1), a drive axle propulsion force ($F_{ax}$, $F_{bx}$, $F_{cx}$) or torque for each drive axle (5a-c) of the plurality of drive axles resulting in substantially equal friction utilization for each drive axle (5a-c) of the plurality of drive axles; and
controlling (S33) a power train arrangement (9a-c) of the vehicle (1) towards providing, to each drive axle (5a-c) of the plurality of drive axles, the drive axle propulsion force ($F_{ax}$, $F_{bx}$, $F_{cx}$) or torque determined for that drive axle (5a-c).

11. The method of claim 10, comprising:

receiving (S41) an indication (33) of a rotational speed of a wheel (11a) on a first drive axle (5a) of the plurality of drive axles, and an indication (35) of a rotational speed of a wheel (13a) on a second drive axle (5b) of the plurality of drive axles;
determining (S42), based on the indication (33) of the rotational speed of the wheel (11a) on the first drive axle (5a) of the plurality of drive axles, and the indication (35) of the rotational speed of the wheel (13a) on the second drive axle (5b) of the plurality of drive axles, a measured speed difference between the rotational speed of the wheel (11a) on the first drive axle (5a) and the rotational speed of the wheel (13a) on the second drive axle (5b); and
controlling the power train arrangement (9a-c) of the vehicle (1) additionally based on the measured speed difference.

12. The method of claim 11, comprising:
controlling, in response to detecting that the measured speed difference is greater than a predefined threshold speed difference, the power train arrangement (9a-c) of the vehicle (1) to reduce the difference between the rotational speed of the wheel (11a) on the first drive axle (5a) and the rotational speed of the wheel (13a) on the second drive axle (5b).

13. The method of claim 12, comprising
controlling the power train arrangement (9a-c) of the vehicle to reduce the difference between the rotational speed of the wheel (11a) on the first drive axle (5a) and the rotational speed of the wheel (13a) on the second drive axle (5b), by reducing the drive axle propulsion force ($F_{ax}$, $F_{bx}$) provided to at least one of the first axle (5a) and the second axle (5b).

14. The method of any of claims 11-13, comprising:

receiving an indication (39) of a pitch rate of the vehicle (1);
estimating (S43), based on the indication (39) of the pitch rate of the vehicle (1) and one of the indication (33) of the rotational speed of the wheel (11a) on the first drive axle (5a) of the plurality of drive axles, and the indication (35) of the rotational speed of the wheel (13a) on the second drive axle (5b) of the plurality of drive axles, an expected speed difference between the rotational speed of the wheel (11a) on the first drive axle (5a) and the rotational speed of the wheel (13a) on the second drive axle (5b); and
controlling (S44), in response to detecting a deviation between the measured speed difference and the expected speed difference, the power train arrangement (9a-c) of the vehicle (1) to reduce the deviation between the measured speed difference and the expected speed difference.

**15.** A computer program product comprising program code for performing, when executed by the processing circuitry (17) comprised in the computer system (13) of any one of claims 1 to 8, the method of any of claims 10 to 14.

Fig. 1

*Fig. 2*

Receive set
of indications
— S31

Determine propulsion
targets for drive axles to
achieve substantially
equal friction utilization
— S32

Control power train
arrangement towards
propulsion targets
— S33

*Fig. 3*

```
┌─────────────────────────┐
│   Receive indication of │
│   rotational speeds and │──── S41
│       pitch rate        │
└─────────────────────────┘
             │
             ▼
┌─────────────────────────┐
│   Determine a measured  │──── S42
│     speed difference    │
└─────────────────────────┘
             │
             ▼
┌─────────────────────────┐
│   Estimate an expected  │──── S43
│     speed difference    │
└─────────────────────────┘
             │
             ▼
┌─────────────────────────┐
│      Control power      │──── S44
│    train arrangement    │
└─────────────────────────┘
```

*Fig. 4*

*Fig. 5*

Fig. 6

## EUROPEAN SEARCH REPORT

**Application Number**

EP 24 20 5471

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/010207 A1 (WESTON KEITH [US] ET AL) 11 January 2024 (2024-01-11) | 1,7-10, 15 | INV. B60W10/08 |
| A | * paragraphs [0023], [0028], [0030], [0031], [0042], [0044], [0045]; figures 2,5 * | 5,6,14 | B60K1/02 B60W30/18 |
| Y | WO 2021/219597 A1 (BOSCH GMBH ROBERT [DE]) 4 November 2021 (2021-11-04) | 1-4, 7-13,15 | |
| A | * page 3, line 6 - line 13 * * page 3, line 24 - page 4, line 2 * * page 5, line 33 - line 36 * * page 6, line 18 - line 27 * * page 7, line 10 - line 12; claims 1-3,5,6 * | 5,6,14 | |
| Y | US 2017/102293 A1 (SINGH KANWAR BHARAT [US]) 13 April 2017 (2017-04-13) | 1-4, 7-13,15 | |
| A | * paragraphs [0061] - [0064], [0086]; figures 1-3,5B * | 5,6,14 | |

**TECHNICAL FIELDS SEARCHED (IPC)**

B60W
B60K

The present search report has been drawn up for all claims

| Place of search | Date of completion of the search | Examiner |
|---|---|---|
| Munich | 14 March 2025 | Rameau, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 20 5471

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | Publication date |
|---|---|---|---|
| US 2024010207 A1 | 11-01-2024 | CN 117360484 A<br>DE 102023117217 A1<br>US 2024010207 A1 | 09-01-2024<br>11-01-2024<br>11-01-2024 |
| WO 2021219597 A1 | 04-11-2021 | CN 113561791 A<br>EP 4143044 A1<br>WO 2021219597 A1 | 29-10-2021<br>08-03-2023<br>04-11-2021 |
| US 2017102293 A1 | 13-04-2017 | EP 3153375 A1<br>US 2017102293 A1 | 12-04-2017<br>13-04-2017 |

EPO FORM P0459

For more details about this annex : see Official Journal of the European Patent Office, No. 12/82